Europäisches Patentamt

European Patent Office

Office européen des brevets

(19)

(11) Veröffentlichungsnummer: **0 024 284
B1**

(12)

# EUROPÄISCHE PATENTSCHRIFT

(45) Veröffentlichungstag der Patentschrift:
13.11.85

(21) Anmeldenummer: 80103314.3

(22) Anmeldetag: 13.06.80

(51) Int. Cl.⁴: **B 64 C 13/42**

(54) **Notsteuereinrichtung.**

(30) Priorität: 21.08.79 DE 2933780

(43) Veröffentlichungstag der Anmeldung:
04.03.81 Patentblatt 81/9

(45) Bekanntmachung des Hinweises auf die Patenterteilung:
13.11.85 Patentblatt 85/46

(84) Benannte Vertragsstaaten:
FR GB IT

(56) Entgegenhaltungen:
FR - A - 1 143 306
FR - A - 1 506 041
US - A - 3 143 042
US - A - 3 505 929
US - A - 3 529 514
US - A - 3 540 350
US - A - 3 995 800

(73) Patentinhaber: **Messerschmitt-Bölkow-Blohm
Gesellschaft mit beschränkter Haftung,
Robert-Koch-Strasse, D-8012 Ottobrunn (DE)**

(72) Erfinder: **Botzler, Ludwig, Mainstrasse 11,
D-8014 Neubiberg (DE)**

## Beschreibung

Die Erfindung bezieht sich auf eine Notsteuereinrichtung (Back-up-Steuereinrichtung) zur Sicherstellung der Funktionen einer Regelanlage eines instabilen Flugzeugs bei durch Ausfall der elektro-hydraulischen Steuerung verursachtem Störbetrieb, wobei ein Hydraulikmedium als Signalträger verwendet wird.

Durch die deutsche Ofenlegungsschrift 1 800 866 ist ein hydraulischer Stellantrieb mit einer elektrohydraulischen Ansteuerung eines hydraulischen Kolbens sowie einer parallel geschalteten mechanischen Ansteuerung bekanntgeworden, welche bei Ausfall der elektrischhydraulischen Ansteuerung automatisch eingeschaltet wird. Durch diese Anordnung soll bei Ausfall der elektrischen Steuerung ein rückfreier Übergang zur mechanischen Steuerung in allen Steuerstellungen erlaubt werden. Hierzu wird das Signalausgangsgestänge der mechanischen Ansteuerung in zwei über ein Hebelgestänge miteinander verbundene Steuerstangen aufgeteilt, deren erste zur Betätigung eines Steuerschiebers für den Stellkolben dient und deren zweite einen während des Normalbetriebes frei beweglichen Trimmkolben trägt und beiden Stangen je eine Verriegelungskupplung zugeordnet ist, die wechselweise die eine oder andere Regelstange blockiert.

Für instabile Flugzeuge ist jedoch eine rein manuelle »Back-up-Steuereinrichtung«, wie man solche redundanten Steuereinrichtungen nennt, welche die Funktionen des Flugzeugs, das man auch als kritisches Regelsystem ansprechen kann, auch bei Störbetrieb sichergestellt, nicht ausreichend. Beispielsweise ist ein instabiles Flugzeug ohne zusätzliche Dämpfungseinrichtung nicht manuell steuerbar.

Durch die FR-A-1 143 306 ist eine Steuereinrichtung zur Sicherstellung der Funktion einer Regelanlage eines Flugzeugs bekanntgeworden, bei der ein Hydraulikmedium als Signalträger verwendet wird. Das vom Steuerknüppel abgenommene mechanische Führungssignal wird in einem hydromechanischen Kommandogeber in ein Hydrauliksignal aufgeschaltet.

Hier handelt es sich um ein Steuersystem, das von der Bordelektrik abhängig ist. Fällt diese auch nur kurzzeitig aus, so ist ein instabiles Flugzeug nicht mehr steuerbar.

Der vorliegenden Erfindung liegt daher die Aufgabe zugrunde, eine redundante Steuereinrichtung für instabile Flugzeuge zu schaffen, die bei Ausfall der normalen Flugsteuereinrichtungen völlig unabhängig die Steuerung des Flugzeugs übernehmen kann.

Wurde hierzu bisher von den Einrichtungen des Standes der Technik vorgeschlagen, daß die Steuerpfade mehrfach ausgebildet werden, so erwies sich diese Lösung zum Beispiel bei Ausfall der Elektronik als unbrauchbar.

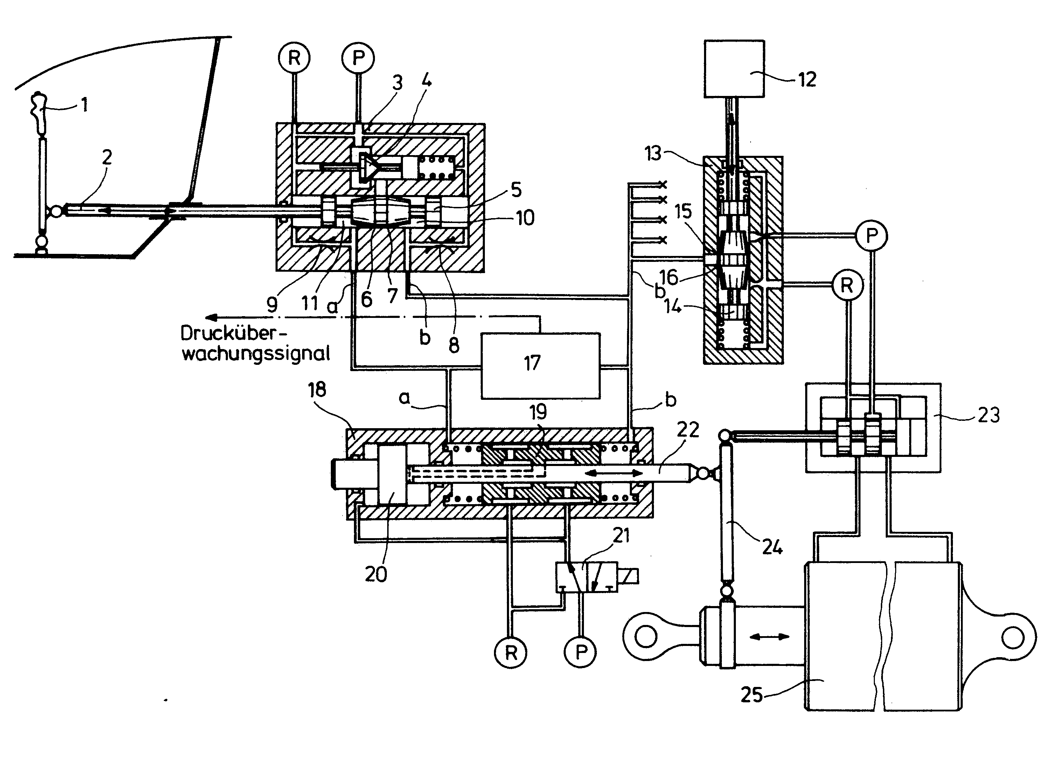

Die Lösung der Aufgabe wird durch die im Anspruch 1 niedergelegte Maßnahme erreicht. Besondere Ausführungsarten der Erfindung sind in den abhängigen Ansprüchen angegeben. Die Erfindung ist an einem Ausführungsbeispiel beschrieben und erläutert und in der einzigen Figur der Zeichnung in einem Blockschaltbild dargestellt.

Für ein kritisches Regelsystem, womit ein instabiles Flugzeug bezeichnet werden kann, muß eine Back-up-Steuereinrichtung die Funktion des Regelsystems bei Störbetrieb sicherstellen, darf im Normalbetrieb aber unter keinen Umständen das Regelsystem beeinflussen, das nur mit aktiven Steuerelementen betrieben werden darf, nämlich den diversen Regelungseinrichtungen. Für diese Back-up-Steuereinrichtung soll nun nur die Energiequelle gewählt werden, die unbedingt zum Betrieb der Anlage erforderlich ist. Hier ist als Signalträger das Hydraulikmedium gut geeignet. Alternativ natürlich auch ein Druckluftmedium. Beide Medien sind von der elektrischen Energieversorgung unabhängig und dementsprechend auch die durch sie betriebene Steuereinrichtung. Das Führungssignal wird dem Steuerknüppel entnommen und ist daher mechanischer Art. Außerhalb der Pilotenkanzel wird dann dieses mechanische Signal in ein hydraulisches Signal umgewandelt und ebenso werden die zur Stabilisierung des Flugzeugs notwendigen Signale wie beispielsweise Anstellwinkel, Geschwindigkeit, Flughöhe usw. in hydraulische Signale umgewandelt und gemeinsam mit dem Führungssignal einem Hydraulik-Aktuator zugeführt, der das Hydrauliksignal wieder in ein mechanisches Signal umwandelt.

In der einzigen Figur der Zeichnung ist ein Ausführungsbeispiel solch einer Back-up-Steuereinrichtung gezeigt, die den vorstehenden Anforderungen voll entspricht. Die Funktionsweise ist wie folgt:

Ein vom Pilot über den Steuerknüppel 1 eingegebenes Signal wird mechanisch mittels des Steuergestänges 2 dem Kommandogeber 3 übertragen. Dieser Kommandogeber ist ein hydromechanisches Gerät und wird vom selben Hydrauliksystem P, R wie der hydraulische Servozylinder 25 mit Druckmedium versorgt. Ein eingebautes Druckregelventil 4 versorgt unabhängig von Systemdruckschwankungen einen Drosselschieber 5 mit konstantem Druck.

Entsprechend der Stellung des Steuerknüppels 1 zu seiner Neutralposition wird der Drosselschieber 5 von seiner Mittelposition ausgelenkt und dadurch die Drosselquerschnitte im gleichen Verhältnis verändert. Den beiden veränderlichen Drosseln 6 und 7 sind je eine Festdrossel 8 und 9 nachgeschaltet, so daß sich in den Steuerkammern 10, 11 ein dem Steuerknüppelausschlag proportionaler Steuerdruck einstellt. Bei dieser Ausführungsform ist nun sichergestellt, daß bei Knüppelneutralstellung der Druck in beiden Steuerkammern gleich ist. Ferner ist der Druckanstiegsgradient bezüglich des Knüppelausschlags durch die Auslegung der veränderlichen Drosseln 6, 7 festgelegt. Eine Abhängigkeit zwischen Knüppelstellung und Steuerdruck ist somit in ausreichender Genauigkeit gegeben.

Zur Stabilisierung der Regelstrecke des instabilen Flugzeugs ist es erforderlich, daß dem Pilotführungssignal noch weitere stabilisierende Signale aufgeschaltet werden. Dies geschieht dadurch, daß die verschiedenen Flugdatensensoren 12 über Leitungen 27 einen hydraulischen Drosselschieber 14 der Sensorventile 13 betätigen. Entsprechend der Stellung der Flugdatensensoren 12 bzw. der Drosselschieber wird die Steuerleitung b über das bewegliche Drosselpaar 15, 16 mit Systemdruck P oder Rücklauf R verbunden. Hierdurch wird der in der Steuerleitung b vorhandene Steuerdruck proportional zum Flugdatensensorsignal verändert.

Der Differenzdruck zwischen den Steuerleitungen a und b ist somit proportional der Steuerknüppelstellung und den zusätzlichen Sensorsignalen. Er wird im Differenzdruckmeßgerät 17 gemessen und dem sogenannten Flight Control Computer zum Zwecke der Zustandsüberwachung übermittelt. Der Differenzdruck beaufschlagt weiterhin einen federzentrierten Steuerkolben 19 im Hydraulikaktuator 18. Dieser federzentrierte Steuerkolben wird mit vorgespannten mechanischen Federn im druckausgeglichenen Zustand in Mittelposition gehalten.

Bei steigendem Differenzdruck zwischen den Steuerleitungen a und b wird der Steuerkolben 19 ausgelenkt, wobei diese Auslenkung proportional der Druckdifferenz oder dem Kommandosignal ist. Solange hydraulischer Systemdruck vorhanden ist, bleibt der Steuerkolben aktiviert. Da dieser jedoch in der Regel zu schwach ist, wird ihm in sogenannter »Back-up-mode« ein hydraulischer Kraftverstärker 20 nachgeschaltet. Dieser Kraftverstärker wird über eine Umschalteinheit 21 und den Steuerkolben 19 mit hydraulischer Druckenergie so beaufschlagt, daß seine Position mit der des Kolbens stets übereinstimmt. Dadurch aber ist in »back-up-mode« die Position des Kraftverstärkers 20 oder des Hydraulikaktuatorausgangs 22 identisch dem Kommandosignal, welches sich aus dem Pilot- und Sensorsignal zusammensetzt. Der hydraulische Kraftverstärker 20 ist genügend stark, den Hauptsteuerschieber 23, den in Parallelanordnung vorgesehenen elektrohydraulischen Steueraktuator (aus Übersichtlichkeitsgründen nicht gezeichnet) und das Steuergestänge 24 zu betätigen.

In sogenannter »fly-by-wire Control mode« wird die Umschalteinheit 21 elektrisch erregt, hierdurch wird der Kraftverstärker 20 von der hydraulischen Energieversorgung P auf Rücklauf R geschaltet und hat somit keine Wirkung mehr auf die Steuerung des Hydraulikzylinders 25. Die Steuerung erfolgt in diesem Falle über den aktiven elektro-hydraulischen Steueraktuator.

Durch die vorbeschriebenen Maßnahmen ist nun sichergestellt, daß, wenn ein Fehler im Betriebsablauf auftritt, das fehlerhafte Steuerelement abgeschaltet, der Fehler angezeigt und der weitere Betriebsablauf durch redundante Steuerelemente sichergestellt wird. Treten nun noch weitere Fehler auf, oder fällt die elektrische Energieversorgung aus, dann wäre ohne das vorbeschriebene »Back-up-System« das instabile Flugzeug dennoch verloren.

**Patentansprüche**

1. Notsteuereinrichtung zur Sicherstellung der Funktionen einer Regelanlage eines instabilen Flugzeugs bei durch Ausfall der elektro-hydraulischen Steuerung verursachtem Störbetrieb, wobei ein Hydraulikmedium als Signalträger verwendet wird, dadurch gekennzeichnet, daß das vom Steuerknüppel (1) abgenommene mechanische Führungssignal einem hydromechanischen Kommandogeber (3) zur Umwandlung in ein Hydrauliksignal eingegeben wird, diesem Pilotführungssignal hydraulische Stabilisierungssignale der Flugdatensensoren (12) — wie beispielsweise Geschwindigkeit, Anstellwinkel etc. — von Sensorventilen (13) aufgeschaltet werden und das aus der Überlagerung des Pilotführungssignals und der Stabilisierungssignale resultierende Steuersignal einem Hydraulikaktuator (18) zugeführt wird, der sie in mechanische Steuersignale für einen Servozylinder (25) umwandelt, wobei die Notsteuereinrichtung über eine Umschalteinheit (21) bei Wiederzuschalten der elektrischen Energieversorgung abschaltbar ist.

2. Notsteuereinrichtung nach Anspruch 1, dadurch gekennzeichnet, daß die von den Flugdatensensoren (12) kommenden Stabilisierungssignale einen hydraulischen Drosselschieber (14) der Sensorventile (13) betätigen.

3. Notsteuereinrichtung nach den Ansprüchen 1 oder 2, dadurch gekennzeichnet, daß der Differenzdruck zwischen den Steuerleitungen (a, b) des Kommandogebers (3), der proportional der Steuerknüppelstellung und den Stabilisierungssignalen in den Leitungen (27) der Flugdatensensoren (12) ist, zusätzlich einen federzentrierten Steuerkolben (19) im Hydraulik-Aktuator (18) beaufschlagt.

4. Notsteuereinrichtung nach den Ansprüchen 1 bis 3, dadurch gekennzeichnet, daß dem Steuerkolben (19) des Aktuators (18) ein Kraftverstärker (20) nachgeschaltet ist.

5. Notsteuereinrichtung nach einem oder mehreren der Ansprüche 1 bis 4, dadurch gekennzeichnet, daß zur Erstellung eines dem Steuerknüppelsignal proportionalen Steuerdrucks in den Steuerkammern (10, 11) im Kommandogeber (3) bzw. dem Drosselschieber (5), den veränderlichen Drosseln (6, 7) je eine Festdrossel (8, 9) nachgeschaltet ist.

**Claims**

1. An emergency control mechanism for ensuring the functions of a control installation of an unstable aircraft upon faulty operation caused by failure of the electro-hydraulic control, in which a hydraulic medium is used as the signal carrier, characterised in that the mechanical guidance signal taken from the control stick (1) is entered into a hydromechanical command transmitter (3) for conversion into a hydraulic signal, this pilot guidance signal has superimposed on it hydraulic stabilisation signals of the flight-data sensors (12) — for example speed, angle of incidence, etc. — from sensor valves (13) and the control signal resulting from the superimposition of the pilot guidance signal and of the stabilisation signals is fed to a hydraulic actuator (18), which converts them into mechanical control signals for a servo cylinder (25), in which the emergency control mechanism can be switched off by way of a switch-over unit (21) upon re-connection of the electrical energy supply.

2. An emergency control mechanism according to claim 1, characterised in that the stabilisation signals coming from the flight-data sensors (12) actuate a hydraulic throttle slide valve (14) of the sensor valves (13).

3. An emergency control mechanism according to claim 1 or 2, characterised in that the differential pressure between the control lines (a, b) of the command transmitter (3), which is proportional to the control stick position and to the stabilisation signals in the lines (27) of the flight-data sensors (12), additionally acts on a spring-centred control piston (19) in the hydraulic actuator (18).

4. An emergency control mechanism according to claims 1 to 3, characterised in that a power amplifier (20) is connected subsequently to the control piston (19) of the actuator (18).

5. An emergency control mechanism according to one or more of claims 1 to 4, characterised in that, to produce a control pressure, porportional to the control stick signal, in the control chambers (10, 11) in the control transmitter (3) or respectively the throttle slide valve (5), one fixed throttle (8, 9) each is connected subseqently to the variable throttles (6, 7).

**Revendications**

1. Dispositif de commande de secours destiné à assurer les fonctions d'une installation de régulation d'un aéronef instable en cas de service perturbé par défaillance de la commande électro-hydraulique; un fluide hydraulique étant utilisé comme support de signaux, dispositif caractérisé par le fait que le signal mécanique de guidage prélevé sur le manche à balai (1) est introduit dans un transmetteur d'ordres hydromécanique (3) pour y être transformé en un signal hydraulique, que des signaux stabilisateurs hydrauliques des capteurs de données de vol (12) — telles que vitesse, angle d'incidence, etc. — sont superposés à ce signal de guidage pilote par des valves de capteuer (13) et que le signal de commande résultant de ladite superposition du signal de guidage pilote et des signaux stabilisateurs est amené à un actionneur hydraulique (18) qui le transforme en des signaux de commande mécaniques pour un cylindre asservi (25), ce même dispositif de commande de secours pouvant être mis hors circuit par une unité de commutation (21) lors du rebranchement de l'alimentation en énergie électrique.

2. Dispositif de commande de secours selon la revendication 1 caractérisé par le fait que les signaux stabilisateurs venant des capteurs de données de vol (12) actionnent un tiroir d'étranglement hydraulique (14) des valves de capteur (13).

3. Dispositif de commande de secours selon les revendications 1 ou 2 caractérisé par le fait que la différence de pression entre les canalisations de commande (a, b) du transmetteur d'ordres (3), laquelle est proportionnelle à la position du manche à balai et aux signaux stabilisateurs dans les canalisations (27) des capteurs de données de vol (12) agit en plus sur un piston de commande (19) centré par des ressorts dans l'actionneur hydraulique (18).

4. Dispositif de commande de secours selon les revendications 1 à 3 caractérisé par le fait qu'un amplificateur de puissance (20) fait suite au piston de commande (19) de l'actionneur (18).

5. Dispositif de commande de secours selon une ou plusieurs des revendications 1 à 4 caractérisé par le fait que, pour établir dans les chambres de commande (10, 11) du transmetteur de signaux (3), ou du tiroir d'étranglement (5), une pression de commande proportionnelle au signal du manche à balai, les étranglements variables (6, 7) sont suivis chacun d'un étranglement fixe (8, 9).

Drucküberwachungssignal